(19) Europäisches Patentamt
European Patent Office
Office européen des brevets

(11) **EP 1 840 401 B1**

(12) **EUROPEAN PATENT SPECIFICATION**

(45) Date of publication and mention
of the grant of the patent:
**08.12.2010   Bulletin 2010/49**

(51) Int Cl.:
***F16D 48/06*** (2006.01)

(21) Application number: **06006644.6**

(22) Date of filing: **30.03.2006**

(54) **Method for defining a touch point of a clutch and a torque characteristic curve relating thereto**

Verfahren um einen Kupplungspunkt und eine diesbezügliche Momentenkennlinie zu definieren

Procédé pour définir le point de contact d'un embrayage et la courbe caractéristique associée du couple

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**03.10.2007   Bulletin 2007/40**

(73) Proprietor: **INDUSTRIAL TECHNOLOGY RESEARCH INSTITUTE**
**Chu-Tung, Hsin-Chu**
**Taiwan (CN)**

(72) Inventors:
• **Tzeng, Shih-Che**
  **Yonghe City**
  **Taipei County 234 (TW)**
• **Lin, Chin-Hone**
  **Puli Town**
  **Nantou Conty 545 (TW)**
• **Chen, Yee-Ren**
  **Hsinchu City 300 (TW)**

(74) Representative: **von Puttkamer · Berngruber**
**Patentanwälte**
**Türkenstrasse 9**
**80333 München (DE)**

(56) References cited:
**EP-A- 1 559 923     US-A- 5 176 234**
**US-A- 6 086 514     US-B1- 6 711 486**

**Description**

## FIELD OF THE INVENTION

The present invention relates to a method for defining a touch point of a clutch and a torque characteristic curve relating thereto, and particularly to a method for precisely defining the position of an initial touch point of a clutch vehicle with automated clutch manual transmission through, calculation and experiment for compensating wear of the clutch without an additional sensor or electronic throttle.

## BACKGROUND OF THE INVENTION

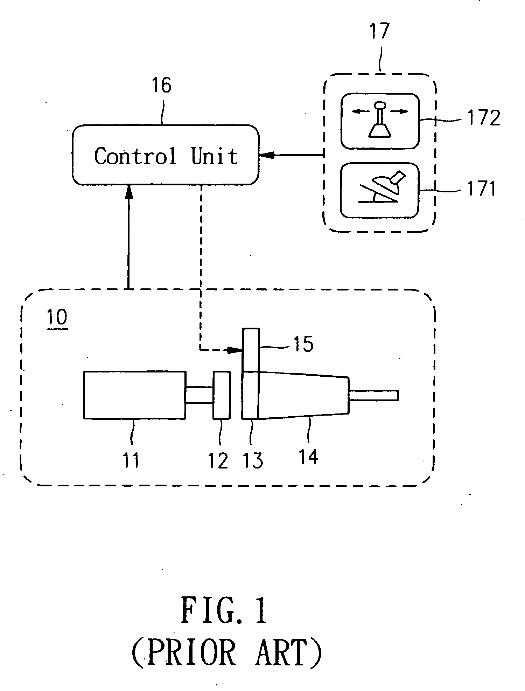

In general, a vehicle with automated clutch manual transmission is powered by a power system 10, as shown in FIG. 1, which comprises an engine 11, a flywheel 12, a clutch 13, a transmission 14 and a clutch actuator 15. The clutch actuator 15 is driven by a control unit 16 to actuate the clutch 13 to reach a position as specified by the control unit 16. When engaging a clutch 13 using manual transmission as an automobile is starting up 171 or changing gear 172, the clutch 13 is firstly driven manually to an approach point for waiting next operation of the driver 17. Compared with a conventional manual transmission, since operation of the clutch 13 of the automated clutch manual transmission is not controlled by the driver 17, the driving quality and safety will be adversely affected if the program control, of the clutch of the automated clutch manual transmission can not sufficiently compensate the wear and tear of the clutch 13 after being used for a long period of time. Therefore, how to specifically define an initial touch point for the clutch 13 is the key technology to clutch control.

There are several prior-art techniques available for defining the initial touch point of a clutch, which can be categorized as following:

(1) Manner of controlling by circuit:

As disclosed in US Patent No. 4,440,279, entitled "Control System or Method for a Friction Device such as a Clutch or Brake", electronic signals are employed to detect torque thereby defining a touch point and an engaging point of a clutch.

However, the manner is readily affected by electromagnetic interference and accuracy of the result obtained by the manner is unstable due to the data obtained thereby is difficult to evaluate.

(2) Manner of controlling by engine speed variation:

As disclosed in US Patent No. 4,629,045, entitled "Automatic Clutch Control System", when clutch compensating conditions are met, the clutch is first driven to engage rapidly and then exits whereby an input shaft of a transmission is driven to rotate. Then the clutch is driven to engage again but slowly this time whereby a clutch engagement position can be defined to be the position at which the rotation speed of the input shaft is varied. Then the working range of the clutch can be defined through a means of learning control. By reversing the abovementioned, the touch point of the clutch can be defined.

Further, as disclosed in US Patent No. 4,646,891, entitled "Automatic Clutch Control", a motor is used to progress a clutch at a constant speed while monitoring the variation of the rotation speed of an engine. When the variation matches a predetermined value, the corresponding position of the clutch is defined as a touch point.

Further, as disclosed in US Patent No. 5,393,274, entitled "Touch Point Identification Algorithm for Automated Clutch Controller", a motor is used to progress a clutch at a constant speed while monitoring the variation of the rotation speed of an engine. When the variation rate drops about 40% ~60%, the corresponding position of the clutch is defined as a touch point.

However, the manner is ancient that its accuracy is poor due to rough definition. Therefore, a clutch torque curve cannot be modified by the manner.

(3) Manner of controlling by torque:

US Patent No. 5,411,124, entitled "Method and Apparatus for Determining Clutch Touch Point", belonging to the above described manner of controlling by engine speed variation also belongs to the manner of torque control. By supposing that torques exerted on a clutch and the positions of the clutch can be defined as a linear relation, the torque, engine rotation speed and progressing time of the clutch can bed speculated and linked in a relationship thereby obtaining the touch point of the clutch.

Further, as disclosed in US Patent No. 6,022,295, entitled "Touch Point Identification for Vehicle Master Clutch", the rotation speed of an engine is fixed at the idle speed through the manner of torque control. Torques A and B and positions A and B are obtained through clutch control. A position at which torque is zero is obtained through extrapolation and is the position of a touch point of the clutch.

Further, as disclosed in US Patent No. 6,086,514, entitled "Clutch Control Method for Determining Clutch Kiss-Point During Running Condition", a pre-established principle of accelerograph, engine rotation speed and negative pressure area of a torque curve is employed. When the engine is stopped during gear shifting, the clutch is compensated to modify in accordance with a clutch stroke-torque curve. A new (after wearing) clutch torque curve is defined.

Further, as disclosed in US Patent No. 6,309,325, entitled "Method and Apparatus for Operating a Clutch in an Automated Mechanical Transmission", a pre-defined clutch torque and accelerograph relation curve is employed as the basis of engaging operation thereby modifying the torque curve of the engaging extent of the clutch and defining the completely engaging position and the touch point position.

However, when a vehicle has not a torque control module and an electronic throttle, the control manner can not be achieved.

Further, as disclosed in US Patent No. 6,711,486, entitled "Drive unit for a motor vehicle and method of identifying the engagement position of an automatic clutch being part of the drive unit", the method is used to move a clutch into different positions and to define the torque in these positions using the angular acceleration of the input shaft of the transmission at these positions. With the found values the touch point of the clutch can be calculated by interpolation or extrapolation. This document represents the closest prior art to the invention.

(4) manner of controlling by additional sensors:

As disclosed in US Patent No. 5,337,874, entitled "Method/system for Determining Clutch Touch Point", relation between driving strength of the clutch and engaging position of the clutch is employed as the guide of judging the initial touch point of the clutch thereby defining the touch point of the clutch.

However, the manner requires sensors to be install additionally that the fabrication cost is increased.

## SUMMARY OF THE INVENTION

Accordingly, a main object of the present invention is to provide a method for defining a touch point according to claim 1.

Preferably, the status of the steering system capable of enabling the clutch wearing compensating module to be enabled automatically comprises the overheating and over slipping of the clutch disc of the clutch.

Preferably, the status of the steering system capable of enabling the clutch wearing compensating module to be enabled automatically comprises the satisfying of the automobile being driven for a specific period of time.

Preferably, the clutch is driven to progress at a constant speed by a motor.

Preferably, the specific position is achieved by progressing the clutch 10~30% more than from the initial touch point of the clutch.

Preferably, the acceleration of the input shaft is obtained by performing an acceleration calculation upon the input shaft speed at an initial point and a predefined speed.

Preferably, the step of figuring out the torque characteristic curve further comprises a step of: performing a multi-points linear regression upon the progressing of the clutch.

Preferably, the initial touch point of the clutch calculated and obtained in step d is calculated by the following formula:

$$\sum T_{external} = T - T_D = I\ddot{\theta} \text{ and } \dot{\theta} = \int_0^s \ddot{\theta} dt = \ddot{\theta} t_s = \omega$$

Preferably, the torque characteristic curve of the clutch obtained in step e is defined by interpolating a relation diagram of the torque and the engaging position of the clutch acquired by experiment.

Preferably, the method is suitable to be applied by an automobile with automated clutch manual transmission.

Other objects, advantages and novel features of the present invention will be drawn from the following detailed embodiment of the present invention with attached drawings, in which:

## BRIEF DESCRIPTION OF THE DRAWINGS

FIG. 1 is a schematic view of a conventional power system.

FIG. 2 is a schematic view of a power system in accordance with the principle of the present invention.

FIG. 3 is a characteristic curve diagram depicting the relation of torques exerting on a clutch and the engaging of the clutch.

FIG. 4 is a flow chart of a method for defining a touch point of a clutch and a torque characteristic curve relating thereto not belonging to the present invention.

FIG. 5 is a flow chart of a method for defining a touch point of a clutch and a torque characteristic curve relating thereto in accordance with another preferred embodiment of the present invention.

## DESCRIPTION OF THE PREFERRED EMBODIMENTS

For your esteemed members of reviewing committee to further understand and recognize the fulfilled functions and structural characteristics of the invention, several preferable embodiments cooperating with detailed description are presented as the follows.

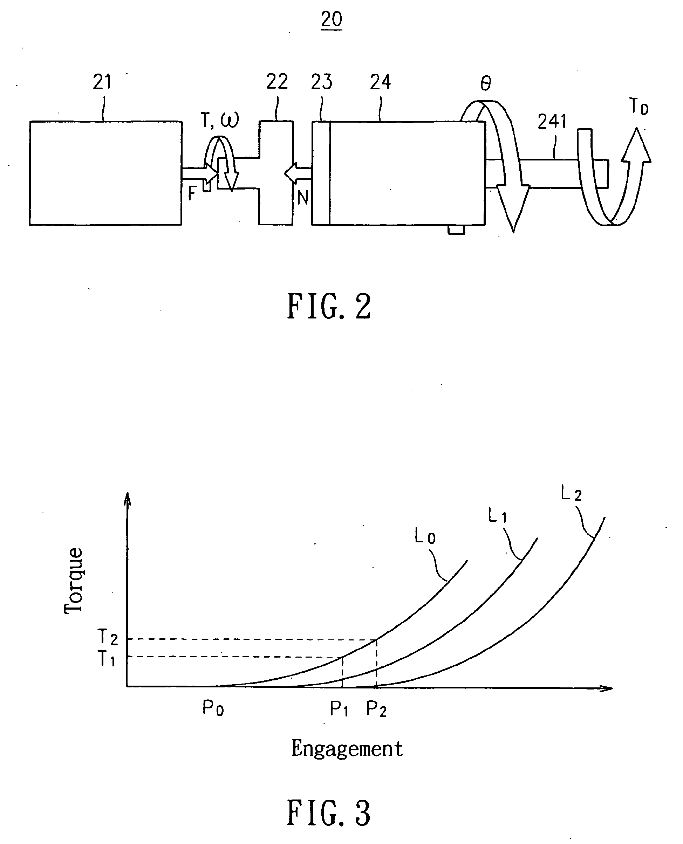

The present invention utilizes the acceleration of the input shaft speed of a transmission and/or synchronization time required to synchronize an engine rotation speed to the input shaft speed of the transmission as the basis for modifying torque characteristic curve of a clutch and defining the initial touch point of the clutch. Referring to FIG. 2, a power system 20 is disclosed and used as an embodiment for illustrating the principle of the present invention, being described as follows: When an engine 21 is operating to output a force F exerting on a flywheel 22, the flywheel 22 is driven thereby to rotate with a speed ω while generating a torque T, and the same time that a clutch actuator (not shown) is driven to force a clutch 23 to exert a force N upon the flywheel 22 for forcing the flywheel 22 to engage with the clutch 23, and thereby enabling the clutch 23 to rotate with the flywheel 22, and momentarily bringing a transmission 24 to rotate by an angle θ against a reverse torque $T_D$ exerted thereon. It is noted that as an automobile is at the neutral gear, the reverse torque $T_D$, driven by the automobile is a constant. Moreover, the torque T is related to the extent of engagement between the flywheel 22 of the engine 21 and the clutch 23. As the friction coefficient of the clutch 23 is configured as a fixed value, it is known that the torque T is only related to the force N.

In accordance with

$$\sum T_{external} = T - T_D \approx I\ddot{\theta} \qquad \qquad \text{-----(formula 1)}$$

whereas

$T$ represents torque;

$T_D$ represents reverse torque;

$I$ represents moment of inertia;

$\ddot{\theta}$ represents angular acceleration.

It can be obtained that

$$\ddot{\theta} = \frac{T - T_D}{I} \qquad \qquad \text{-----(formula 2)}$$

It is known from formula 2 that $T - T_D$ and $\ddot{\theta}$ are in direct ratio. Since the reverse torque $T_D$ is a fixed value, the torque $T$ and the angular acceleration $\ddot{\theta}$ are in direct ratio.

Further in accordance with

$$\dot{\theta} = \int_0^S \ddot{\theta}dt = \ddot{\theta}t_S = \omega \qquad\qquad -----(\text{formula 3}).$$

whereas

$\dot{\theta}$ represents angular speed;

$\ddot{\theta}$ represents angular acceleration;

$t$ represents time

$\omega$ represents speed.

It can be obtained that

$$t_S = \frac{\omega I}{T - T_D} \qquad\qquad -----(\text{formula 4})$$

It is known from formula 4 that the torque $T$ and the time $t_S$ are in inverse ratio.

Accordingly, it is supposed that when variation of the engaging extent of the clutch 23 and the flywheel 22 is small, the variation of the engaging extent and the torque of the clutch 23 are regarded as being defined by a linear relation. To define the position of a touch point of the clutch 23, the angular acceleration $\ddot{\theta}$ and the synchronization time of the rotation speed of the input shaft 241 of the transmission 24 are regarded as a linear relation with the position of the clutch 23, or the torque curve of the clutch 23 can be pre-defined through experiment and then the position at which the torque of the clutch 23 is 0 is obtained through extrapolation. A diagram of torque characteristic curves is shown in FIG. 3. Curve L0 is a torque characteristic curve of a completely new clutch. Curve L1 is a torque characteristic curve of a clutch being used for a period of time. Curve L2 is a torque curve of a totally worn-out clutch. Thus, a clutch with different wearing can be compensated to modify the wear and tear in accordance with the curve L0.

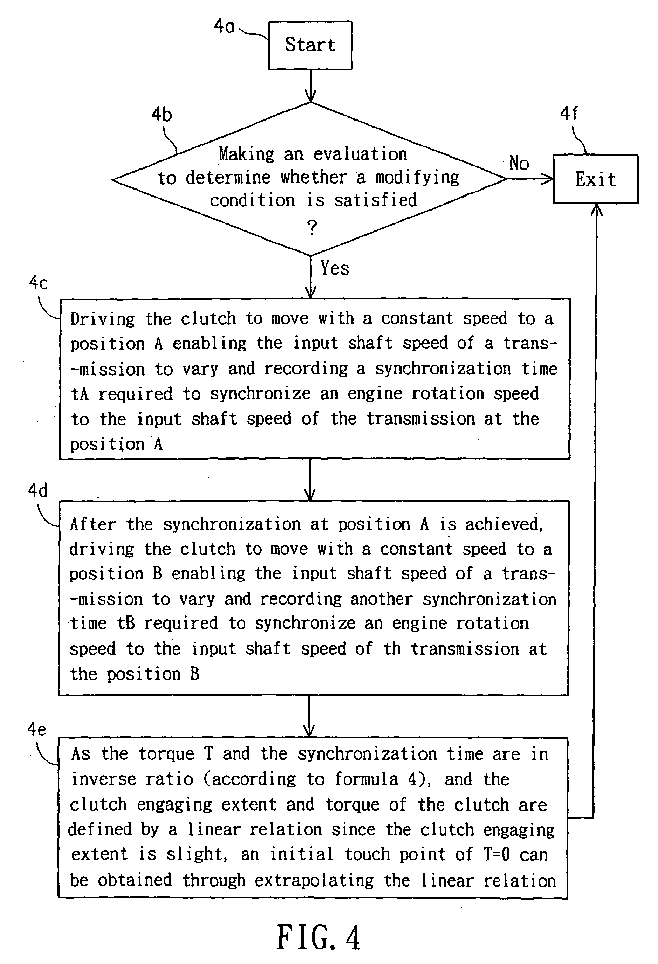

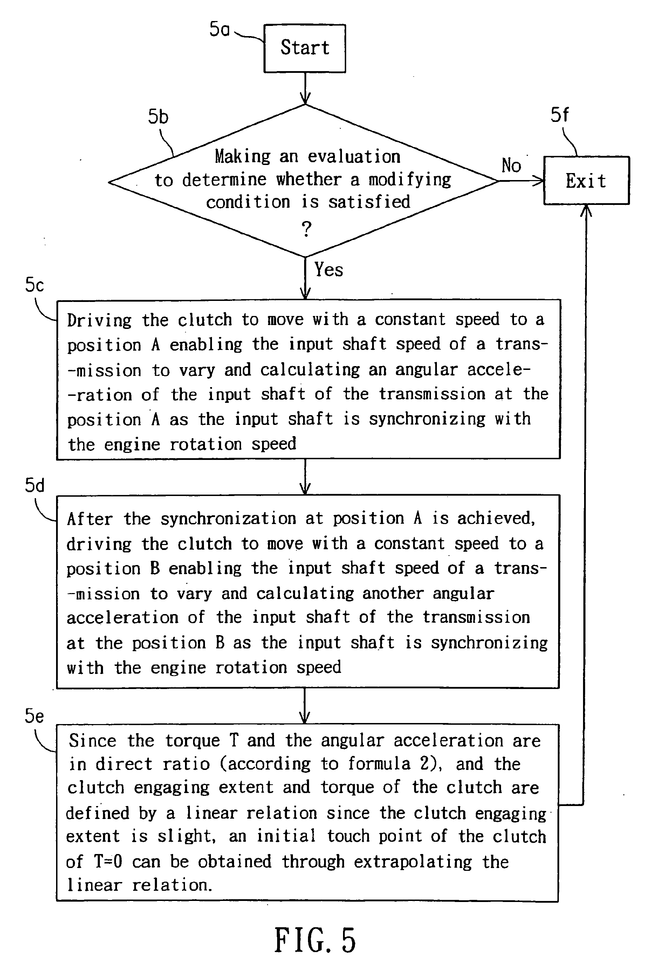

In accordance with the principle described above and the forgoing torque characteristic curves, two control manners of the present invention can be concluded as shown respectively in FIGs. 4 and 5. The difference between the two is that the controlling of FIG. 4 is a time-base control and the controlling of FIG. 5 is a control basing on angular acceleration. However, the both manners can achieve the object of the present invention to define the initial touch point of the clutch.

Firstly, referring to FIG. 4, a method not belonging to the invention is described as follows:

*4a.* Starting by activating a clutch wearing compensating module;

*4b.* Making an evaluation to determine whether a modifying condition is satisfied, if so, that is, the input shaft speed of the transmission is zero while the transmission is placed at neutral and the engine is idle, the step *4c* is going to be executed; otherwise, step *4f* is going to be executed for stopping the clutch wearing compensation;

*4c.* Driving the clutch to move with a constant speed to a position **A** enabling the input shaft speed of a transmission to vary and recording a synchronization time t**A** required to synchronize an engine rotation speed to the input shaft speed of the transmission at the position **A**;

*4d.* After the synchronization at position **A** is achieved, driving the clutch to move with a constant speed to a position **B** enabling the input shaft speed of a transmission to vary and recording another synchronization time t**B** required to synchronize an engine rotation speed to the input shaft speed of the transmission at the position **B**;

*4e.* As the torque $T$ and the synchronization time are in inverse ratio (according to formula 4), and the clutch engaging extent and torque of the clutch are defined by a linear relation since the clutch engaging extent is slight, an initial touch point of the clutch of $T =0$ can be obtained through extrapolating the linear relation.

In accordance with the process of the above control manner, it can be concluded that a method for defining a clutch touch point and a torque characteristic curve of an automobile with automated clutch manual transmission of the present invention includes the following steps:

*a*. controlling the clutch to progress from a completely disengaging position to a specific position capable of enabling the input shaft speed of a transmission to vary while enabling of the clutch to pass at least a first engaging position and a second engaging position during the progressing of the clutch;

*b*. calculating an angular acceleration of the input shaft of the transmission at a first engaging position;

*c*. calculating another angular acceleration of the input shaft off the transmission at a second engaging position;

*d*. calculating the position of an initial touch point of the clutch in accordance with the values obtained at steps *b* and *c*; and

*e.* defining a torque characteristic curve of the clutch by interpolating a relation diagram of the torque and the engaging position of the clutch acquired by experiment.

Therefore, the compensating and modifying of the wearing of the clutch can be achieved by the forgoing steps.
The method of the invention further comprises an evaluation step to be executed before step *a,* in which a clutch wearing compensating module is employed to determine whether an automobile meets a modifying conditions; if so, that is, the input shaft speed of the transmission is zero while the transmission is placed at neutral and the engine is idle, the step *a* is going to be executed; otherwise, step *a* is not going to be executed. In addition, the clutch wearing compensating module is able to detect status of a steering system of the automobile and thus being automatically enabled accordingly, whereas the status of the steering system capable of enabling the clutch wearing compensating module to be enabled automatically comprises the overheating and over slipping of the clutch disc of the clutch, and the satisfying of the automobile being driven for a specific period of time. Moreover, The progressing of the clutch of step *a* is driven by a motor at a constant speed; and the specific position is achieved by progressing the clutch 10~30% more than from the initial touch point of the clutch for helping the calculation of synchronization time. Furthermore, the step of figuring out the torque characteristic curve of step *e* further comprises a step of: performing a multi-points linear regression upon the progressing of the clutch so as to obtain a more accurate torque characteristic curve.
Referring to FIG. 5, another control manner is described as follows:

*5a.* Starting by activating a clutch wearing compensating module;

*5b.* Making an evaluation to determine whether a modifying condition is satisfied, if so, that is, the input shaft speed of the transmission is zero while the transmission is placed at neutral and the engine is idle, the step *5c* is going to be executed; otherwise, step *5f* is going to be executed for stopping the clutch wearing compensation;

*5c.* Driving the clutch to move with a constant speed to a position *A* enabling the input shaft speed of a transmission to vary and calculating an angular acceleration of the input shaft of the transmission at the position *A* as the input shaft is synchronizing with the engine rotation speed;

*5d.* After the synchronization at position *A* is achieved, driving the clutch to move with a constant speed to a position *B* enabling the input shaft speed of a transmission to vary and calculating another angular acceleration of the input shaft of the transmission at the position *B* as the input shaft is synchronizing with the engine rotation speed;

*5e.* Since the torque *T* and the angular acceleration are in direct ratio (according to formula 2), and the clutch engaging extent and torque of the clutch are defined by a linear relation since the clutch engaging extent is slight, an initial touch point of the clutch of *T* =0 can be obtained through extrapolating the linear relation.

In accordance with the process of the above control manner, it can be concluded that another method for defining a clutch touch point of an automobile with automated clutch manual transmission of the present invention includes the following steps:

*a.* controlling the clutch to progress from a completely disengaging position to a specific position capable of enabling the input shaft speed of a transmission to vary while enabling of the clutch to pass at least a first engaging position and a second engaging position during the progressing of the clutch;

*b.* calculating an angular acceleration of the input shaft of the transmission at a first engaging position;

*c*. calculating another angular acceleration of the input shaft of the transmission at a second engaging position;

*d.* calculating the position of an initial touch point of the clutch in accordance with the values obtained at steps *b* and *c*.

*e*. defining a torque characteristic curve of the clutch by interpolating a relation diagram of the torque and the engaging position of the clutch acquired by experiment.

Therefore, the compensating and modifying of the wearing of the clutch can be achieved by the forgoing steps.

Similar to that shown in FIG. 4, the method of FIG. 5 further comprises an evaluation step to be executed before step *a*, in which a clutch wearing compensating module is employed to determine whether an automobile meets a modifying conditions; if so, that is, the input shaft speed of the transmission is zero while the transmission is placed at neutral and the engine is idle, the step *a* is going to be executed; otherwise, step *a* is not going to be executed. In addition, the clutch wearing compensating module is able to detect status of a steering system of the automobile and thus being automatically enabled accordingly, whereas the status of the steering system capable of enabling the clutch wearing compensating module to be enabled automatically comprises the overheating and over slipping of the clutch disc of the clutch, and the satisfying of the automobile being driven for a specific period of time. Moreover, The progressing of the clutch of step *a* is driven by a motor at a constant speed; and the specific position is achieved by progressing the clutch 10~30% more than from the initial touch point of the clutch for helping the calculation of synchronization time. Furthermore, the step of figuring out the torque characteristic curve of step *e* further comprises a step of: performing a multi-points linear regression upon the progressing of the clutch so as to obtain a more accurate torque characteristic curve.

As described above, the present invention provides a method for defining a touch point of a clutch and a torque characteristic curve relating thereto. In the preferred embodiment, torques exerting on a clutch of two different engaging positions can be obtained by comparing times required for enabling input shaft speed to synchronize with engine speed, or by comparing accelerations of input shaft, as the clutch is being moved to the two different engaging positions by a clutch actuator. Thereafter, as the relation between the position of the clutch and the torque can be acquired either by experiment or by assumption, a position where the torque exerting on the clutch is zero is being defined as the clutch touch point, and thus the torque characteristic curve can be figured out accordingly. The manner of the present invention is simple and precise and does not need additional device thereby reducing cost.

While the preferred embodiment of the invention has been set forth for the purpose of disclosure, modifications of the disclosed embodiment of the invention as well as other embodiments thereof may occur within the scope of the claims.

## Claims

1. A method for defining a touch point of a clutch (23) for compensating the wear of the clutch (23), wherein a clutch wearing compensating module is able to detect status of a steering system of the automobile and thus being automatically enabled accordingly, whereby the clutch (23) is arranged between an engine (21) and a transmission (24) of an automobile, the method comprising the following steps:

*a.* Executing an evaluation step to be executed wherein a clutch wearing compensating module is employed to determine whether an automobile meets a modifying condition ; if so, that is, the input shaft speed of the transmission is zero while the transmission (24) is placed at neutral and the engine (21) is idling.

*b.* When the modifying condition is met, the clutch (23) is controlled to progress from a completely disengaging position to a specific position capable of enabling the speed of the input shaft (241) of the transmission (24) to vary while enabling of the clutch (23) to pass at least a first engaging position and a second engaging position during the progressing of the clutch (23) and otherwise stopping the method.

*c.* Calculating a first angular acceleration of the input shaft (241) of the transmission (24) at the first engaging position.

*d.* Calculating a second angular acceleration of the input shaft (241) of the transmission (24) at the second engaging position.

*e.* Calculating the position of an initial touch point of the clutch (23) in accordance with the first and second angular acceleration values obtained at the steps *c* and *d*.

2. The method of claim 1, wherein the status of the steering system capable of enabling the clutch wearing compensating module to be enabled automatically comprises the overheating and over slipping of the clutch disc of the clutch (23), and the satisfying of the automobile being driven for a specific period of time.

3. The method of claim 1, wherein the clutch (23) is driven to progress at a constant speed by a motor.

4. The method of claim 1, wherein the specific position is achieved by progressing the clutch (23) 10~30% more than from the initial touch point of the clutch (23).

5. The method of claim 1, wherein the acceleration of the input shaft (241) is obtained by performing an acceleration calculation upon the input shaft (241) speed at an initial point and a predefined speed.

6. The method of claim 1, wherein the initial touch point of the clutch (23) calculated and obtained in *the* step*s c*, *d, e* is calculated by the following formula:

$$\sum T_{external} = T - T_D = I\ddot{\theta} \text{ and } \dot{\theta} = \int_0^S \ddot{\theta} dt = \ddot{\theta} t_S = \omega$$

whereas

$T$ represents torque;
$T_D$ represents reverse torque;
$I$ represents moment of inertia;
$\dot{\theta}$ represents angular speed;
$\ddot{\theta}$ represents angular acceleration;
$t$ represents time;
$\omega$ represents speed.

7. The method of claim 1, further comprising a step of:

*f.* figuring out the torque characteristic curve of the clutch (23).

8. The method of claim 7, wherein the step of figuring out the torque characteristic curve further comprises a step of: performing a multi-points linear regression upon the progressing of the clutch (23).

9. The method of claim 7, wherein the torque characteristic curve of the clutch (23) obtained in step *f* is defined by interpolating a relation diagram of the torque and the engaging position of the clutch (23) acquired by experiment.

**Patentansprüche**

1. Verfahren zum Festlegen eines Schleifpunktes einer Kupplung (23) zum Kompensieren des Verschleißes derselben, bei dem ein Kupplungsverschleiß-Ausgleichsmodul den Zustand einer Lenkung des Kraftfahrzeugs erfassen kann und **dadurch** selbsttätig freigeschaltet wird, wobei die Kupplung (23) zwischen einem Motor (21) und einem Getriebe (24) eines Kraftfahrzeugs sitzt, mit folgenden Schritten:

a. Ausführen eines auszuführenden Auswerteschritts, wobei mittels eines Kupplungsverschleiß-Ausgleichsmoduls ermittelt wird, ob ein Kraftfahrzeug eine Modifizierbedingung erfüllt, d.h. die Drehzahl der Eingangswelle des Getriebes gleich null ist, während das Getriebe (24) in der Neutralstellung und der Motor (21) leerläuft;
b. Bei erfüllter Modifizierbedingung wird die Kupplung (23) angesteuert, aus einer vollständig ausgekuppelten in eine bestimmte Position zu rücken, in der die Drehzahl der Eingangswelle (241) des Getriebes (24) sich ändern kann, während die Kupplung (23) während des Einrückens mindestens eine erste und eine zweite Einrückposition durchläuft, und ansonsten das Verfahren abgebrochen;
c. Berechnen einer ersten Winkelbeschleunigung der Eingangswelle (241) des Getriebes (24) in der ersten Einrückposition;

d. Berechnen einer zweiten Winkelbeschleunigung der Eingangswelle (241) des Getriebes (24) in der zweiten Einrückposition;

e. Berechnen der Position eines anfänglichen Schleifpunkts der Kupplung (23) entsprechend den in den Schritten (c.) und (d.) erhaltenen Werten der ersten und zweiten Winkelbeschleunigung.

2. Verfahren nach Anspruch 1, bei dem der Zustand der Lenkung, bei dem das Kupplungsverschleiß-Ausgleichssystem selbsttätig freischaltbar ist, das Überhitzen und überstarke Rutschen der Kupplungsscheibe der Kupplung (23) sowie den Fahrbetrieb des Kraftfahrzeugs über eine bestimmte Zeitspanne beinhaltet.

3. Verfahren nach Anspruch 1, bei dem die Kupplung (23) von einem Motor zum Lauf mit konstanter Drehzahl angetrieben wird.

4. Verfahren nach Anspruch 1, bei dem die bestimmte Position erreicht wird, indem die Kupplung (23) 10-30% weiter vorbewegt wird als aus ihrem anfänglichen Schleifpunkt.

5. Verfahren nach Anspruch 1, bei dem man die Beschleunigung der Eingangswelle (241) erhält, indem man auf die Drehzahlen der Eingangswelle an einem Anfangs- und einem Endpunkt eine Beschleunigungsberechnung durchführt.

6. Verfahren nach Anspruch 14, bei dem der in den Schritten (c.), (d.) und (e.) berechnete und erhaltene anfängliche Schleifpunkt der Kupplung (23) nach folgender Formel berechnet wird:

$$\Sigma T_{external} = T - T_D = I\ddot{\theta} \quad \text{und} \quad \dot{\theta} = \int_0^s \ddot{\theta}\,dt = \ddot{\theta}t_s = \omega$$

in der

$T$ = Drehmoment
$T_D$ = Rück-Drehmoment
$I$ = Trägheitsmoment
$\dot{\theta}$ = Winkelgeschwindigkeit
$\ddot{\theta}$ = Winkelbeschleunigung
$t$ = Zeit
$\omega$ = Drehzahl

7. Verfahren nach Anspruch 1 weiterhin mit dem Schritt:

f. Bestimmen der Drehmomentcharakteristik der Kupplung (23).

8. Verfahren nach Anspruch 7, bei dem das Bestimmen der Drehmomentcharakteristik weiterhin das Durchführen einer linearen Mehrpunkt-Regression auf die Einrückbewegung der Kupplung (23) beinhaltet.

9. Verfahren nach Anspruch 7, bei dem die im Schritt (f.) erhaltene Drehmomentcharakteristik der Kupplung (23) definiert wird durch Interpolieren einer experimentell aufgenommenen Kurve des Zusammenhangs zwischen dem Drehmoment und der Eingriffstellung der Kupplung (23).

**Revendications**

1. Procédé pour définir le point de contact d'un embrayage (23) pour compenser l'usure de l'embrayage (23), dans lequel un module de compensation d'usure d'embrayage est en mesure de détecter un statut d'un système de direction de l'automobile et est ainsi automatiquement activé en conséquence, ledit embrayage (23) étant agencé entre un moteur (21) et une transmission (24) d'une automobile, le procédé comprenant les étapes suivantes consistant à :

a. exécuter une étape d'évaluation à exécuter, dans laquelle un module de compensation d'usure d'embrayage est employé afin de déterminer si une automobile satisfait à une condition de modification ; si c'est le cas, à savoir, la vitesse de l'arbre d'entrée de la transmission est zéro alors que la transmission (24) est placée au point neutre et le moteur (21) marche au ralenti,

b. quand la condition de modification est satisfaite, l'embrayage (23) est commandé afin de progresser d'une position de débrayage complet vers une position spécifique en mesure d'activer la vitesse de l'arbre d'entrée (241) de la transmission (24) afin de varier tout en permettant à l'embrayage (23) de passer à au moins une première position d'embrayage et une seconde position d'embrayage pendant la progression de l'embrayage (23) et sinon arrêter le procédé,

c. calculer une première accélération angulaire de l'arbre d'entrée (241) de la transmission (24) à la première position d'embrayage,

d. calculer une seconde accélération angulaire de l'arbre d'entrée (241) de la transmission (24) à la seconde position d'embrayage,

e. calculer la position d'un point de contact initial de l'embrayage (23) conformément à la première et la seconde valeur d'accélération angulaire obtenues aux étapes c et d.

2. Procédé selon la revendication 1, dans lequel le statut du système de direction en mesure d'activer le module de compensation d'usure de l'embrayage afin qu'il soit activé automatiquement comprend la surchauffe et le patinage du disque d'embrayage de l'embrayage (23) et la satisfaction de la condition que l'automobile ait été conduite pendant une période de temps spécifique.

3. Procédé selon la revendication 1, dans lequel l'embrayage (23) est entraîné afin de progresser à une vitesse constante par un moteur.

4. Procédé selon la revendication 1, dans lequel la position spécifique est atteinte en faisant progresser l'embrayage (23) 10 à 30% plus que à partir du point de contact initial de l'embrayage (23).

5. Procédé selon la revendication 1, dans lequel l'accélération de l'arbre d'entrée (241) est obtenue en effectuant un calcul d'accélération sur la vitesse de l'arbre d'entrée (241) à un point initial et une vitesse prédéfinie.

6. Procédé selon la revendication 1, dans lequel le point de contact initial de l'embrayage (23) calculé et obtenu aux étapes c, d, e est calculé par la formule suivante :

$$\sum T_{external} = T - T_D = I\ddot{\theta} \text{ and } \dot{\theta} = \int_0^s \ddot{\theta} dt = \ddot{\theta} t_s = \omega$$

dans laquelle

T représente le couple ;
$T_D$ représente le couple inverse ;
I représente le moment d'inertie ;
$\dot{\theta}$ représente la vitesse angulaire ;
$\ddot{\theta}$ représente l'accélération angulaire ;
t représente le temps ;
w représente la vitesse.

7. Procédé selon la revendication 1, comprenant en outre une étape consistant à :

f. déterminer la courbe caractéristique du couple de l'embrayage (23).

8. Procédé selon la revendication 7, dans lequel l'étape de détermination de la courbe caractéristique du couple comprend en outre une étape consistant à : effectuer une régression linéaire multi-points sur la progression de l'embrayage (23).

9. Procédé selon la revendication 7, dans lequel la courbe caractéristique du couple de l'embrayage (23) obtenue à l'étape f est définie en interpolant un diagramme de relation du couple et de la position d'embrayage de l'embrayage (23) acquise par des expériences.

FIG. 1
(PRIOR ART)

FIG. 2

FIG. 3

4a — Start

4b — Making an evaluation to determine whether a modifying condition is satisfied ? — No → 4f Exit

Yes

4c — Driving the clutch to move with a constant speed to a position A enabling the input shaft speed of a trans- -mission to vary and recording a synchronization time tA required to synchronize an engine rotation speed to the input shaft speed of the transmission at the position A

4d — After the synchronization at position A is achieved, driving the clutch to move with a constant speed to a position B enabling the input shaft speed of a trans- -mission to vary and recording another synchronization time tB required to synchronize an engine rotation speed to the input shaft speed of th transmission at the position B

4e — As the torque T and the synchronization time are in inverse ratio (according to formula 4), and the clutch engaging extent and torque of the clutch are defined by a linear relation since the clutch engaging extent is slight, an initial touch point of T=0 can be obtained through extrapolating the linear relation

FIG. 4

5a — **Start**

5b — Making an evaluation to determine whether a modifying condition is satisfied ? — No → **Exit** — 5f

Yes

5c — Driving the clutch to move with a constant speed to a position A enabling the input shaft speed of a trans--mission to vary and calculating an angular accele--ration of the input shaft of the transmission at the position A as the input shaft is synchronizing with the engine rotation speed

5d — After the synchronization at position A is achieved, driving the clutch to move with a constant speed to a position B enabling the input shaft speed of a trans--mission to vary and calculating another angular acceleration of the input shaft of the transmission at the position B as the input shaft is synchronizing with the engine rotation speed

5e — Since the torque T and the angular acceleration are in direct ratio (according to formula 2), and the clutch engaging extent and torque of the clutch are defined by a linear relation since the clutch engaging extent is slight, an initial touch point of the clutch of T=0 can be obtained through extrapolating the linear relation.

# FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4440279 A
- US 4629045 A
- US 4646891 A
- US 5393274 A
- US 5411124 A
- US 6022295 A
- US 6086514 A
- US 6309325 B
- US 6711486 B
- US 5337874 A